# EUROPEAN PATENT SPECIFICATION

(11) **EP 2 749 661 B1**
(45) Date of publication and mention of the grant of the patent: **14.09.2016**
(21) Application number: 13199567.2
(22) Date of filing: 24.12.2013
(51) Int. Cl.: C22C 13/02, F16C 33/12

(54) **Slide member and bearing device using the same**
Gleitelement und Lagervorrichtung damit
Elément coulissant et dispositif de palier utilisant celui-ci

(30) Priority: 28.12.2012 JP 2012287427
(43) Date of publication of application: 02.07.2014
(73) Proprietor: Daido Metal Company Ltd., Nagoya-shi, Aichi-Ken (JP)
(72) Inventor: Kazuaki, Toda, Aichi-ken, (JP); Satoru, Kurimoto, Aichi-ken, (JP); Hirotaka, Kubota, Aichi-ken, (JP); Tadatoshi, Nagasaki, Aichi-ken, (JP)
(74) Representative: Bennett, Nicholas

(56) References cited:
- EP-A1- 2 333 129
- EP-A1- 2 634 276
- DE-A1- 3 623 929
- US-A- 4 150 983
- US-A1- 2006 193 744
- MOAZAMI GOUDARZI M ET AL: "Investigation of characteristics of tin-based white metals as a bearing material", MATERIALS AND DESIGN, LONDON, GB, vol. 30, no. 6, 19 August 2008 (2008-08-19), pages 2283-2288, XP026079057, ISSN: 0261-3069, DOI: 10.1016/J.MATDES.2008.07.056 [retrieved on 2008-08-19]
- SPIEKERMANN P: "Alloys - a special problem of patent law", NONPUBLISHED ENGLISH TRANSLATION OF DOCUMENT, pages 1-20, XP002184689,

## Description

### FIELD

Embodiments disclosed herein relate to a slide member and a bearing device using the slide member.

### BACKGROUND

Slide members used in bearing devices are expected to further extend their longevity while staying free of possible pollutants such as Pb, As, and Cd.

JP 2011-513592 A discloses adding metal elements or rare earth elements such as Co, Mn, Sc, and GE to Sn-Sb-Cu typically referred to as Sn-based white metal in achieving this objective. JP 2011-513592 A teaches that the strength of the alloy layer made of the Sn-based white metal can be improved by refinement and truncation of the intermetallic compound phase such as Cu-Sn and Sn-Sb precipitated in the Sn matrix of the Sn-based white metal.

Repeated load applied to a slide member produces fatigue-driven cracks which may propagate toward the metal back through the Sn matrix from the sliding surface of the slide member which slides with the counter element. Thus, in the structure disclosed JP 2011-513592 A, the fatigue crack tends to propagate via the boundary portion between the Sn-matrix and Sn-Sb compound phase because the strength of the boundary portion between the Sn-matrix and Sn-Sb compound phase is weak.

### SUMMARY

It is thus, one object of the present invention to provide a slide member which suppresses the propagation of fatigue cracks and thereby exhibits extended longevity. It is another object to provide a bearing device using such slide member.

In one aspect, a slide member includes a metal back; and a bearing alloy layer provided over the metal back and comprising a Sn-based alloy. The bearing alloy layer includes a Sn matrix, and an abnormally shaped intermetallic compound phase dispersed in the Sn matrix in which D≧80 µm and Lc/D≧350% when Lc represents a perimeter of the abnormally shaped intermetallic compound phase in a cross section of the bearing alloy layer and D represents a diameter of a circumscribing circle of the abnormally shaped intermetallic compound phase in the cross section of the bearing alloy layer.

The bearing alloy layer of the slide member includes abnormally shaped intermetallic compound phases in the Sn matrix. The Sn matrix may comprise Sn which incorporates materials such as Sb and Bi as a solid solution. The abnormally shaped intermetallic compound phase is an intermetallic compound phase in which D is equal to or greater than 80 µm and Lc/D is equal to or greater than 350% when D represents a diameter of a circumscribing circle of the abnormally shaped intermetallic compound phase within a given observation section, whereas Lc represents the perimeter of the abnormally shaped intermetallic compound phase within the observation section. In other words, Lc/D indicates the ratio of perimeter Lc of the abnormally shaped intermetallic compound phase to diameter D of the circumscribing circle of the abnormally shaped intermetallic compound phase. The observation section is taken along the direction parallel to the direction oriented toward the bearing alloy layer from the metal back.

Accordingly, the abnormally shaped intermetallic compound phase has perimeter Lc which is sufficiently long with respect to its size. As a result; the boundary portion between the abnormally shaped intermetallic compound phase and the Sn matrix is intricately contoured and runs in a complex convexo-concave shape as compared to conventional structures. In summary, the abnormally shaped intermetallic compound phase is defined as an intermetallic compound phase arranged in a predetermined size and which is irregular in shape as compared to circular, rectangular, or needle-like shapes of intermetallic compound phases in general.

As described above, fatigue cracks formed at the surface of the bearing alloy layer, in other words, the sliding surface with the counter element propagates through the bearing alloy layer toward the metal back. Especially when an intermetallic compound phase precipitates into the Sn matrix, the boundary portion between the Sn matrix and the intermetallic compound phase exhibits poor strength. Thus, fatigue crack tends to propagate via the boundary portion. In the embodiment of the present invention on the other hand, the intermetallic compound phase is arranged to a predetermined size and is irregularly shaped. Thus, the boundary portion of the Sn matrix and the abnormally shaped intermetallic compound phase runs intricately and is sufficiently extended, which makes the penetration of the fatigue crack difficult. As a result, the path in which the fatigue crack propagates in the bearing alloy layer is rendered intricate and is extended as compared to a general intermetallic compound phase. Thus, it takes longer time for the fatigue crack to reach the metal back from the sliding surface of the bearing alloy layer. Accordingly, it is possible to inhibit the propagation of the fatigue crack and provide a slide member with extended longevity. The bearing alloy layer may include an intermetallic compound phase that is not an abnormally shaped intermetallic compound phase as defined above.

In one aspect, an average of diameter D of the circumscribing circle of the abnormally shaped intermetallic compound phase ranges from 100 µm to 300 µm.

The length of the path of fatigue crack running intricately by the presence of abnormally shaped intermetallic compound phases becomes more preferable with respect to the thickness of the bearing alloy layer when the average of diameter D of the circumscribing circle in the aforementioned observation section is equal to or greater than 100 µm. Because the abnormally shaped intermetallic compound phase is harder than the Sn matrix, the average of diameter D of the circumscribing circle is preferably controlled to 300 µm or less when possible damages to the counter element is considered. Thus, it is possible to inhibit the propagation of the fatigue crack and provide a slide member with extended longevity by controlling the size of the abnormally shaped intermetallic compound phase through control of diameter D of the circumscribing circle.

In one aspect, 50% or more of the total count of abnormally shaped intermetallic compound phase includes aggregates of two or more types of intermetallic compound phases. Among the aggregates of intermetallic compound phases that configure the two or more types of intermetallic compound phases, the k th intermetallic compound phase (2≦k≦n) is smaller and harder than the k-1 th intermetallic compound phase, and a second intermetallic compound phase contacts a first intermetallic compound phase when n(n≧2) being the number of types of intermetallic compound phases configuring the abnormally shaped intermetallic compound phase and are defined as the first intermetallic compound phase, ···, nth intermetallic compound phase.

As described above, 50% or more of the total count of abnormally shaped intermetallic compound phase each includes aggregates of n types of intermetallic compound phases. The abnormally shaped intermetallic compound phase includes aggregates of two or more types of intermetallic compound phases and is structurally integral. When measured in the aforementioned observation section, the k th intermetallic compound phase (2≦k≦n) constituting the abnormally shaped intermetallic compound phase is smaller and harder than the k-1 th intermetallic compound phase. The first intermetallic compound phase and the second intermetallic compound phase of the abnormally shaped intermetallic compound phase configured by n types of intermetallic compound phases contact one another. The shape and the hardness of the crystal grain of the intermetallic compound phase varies depending upon the metal elements being combined. Thus, by configuring the abnormally shaped intermetallic compound phase by aggregates of multiple intermetallic compound phases, the shape of the abnormally shaped intermetallic compound phase can be rendered even more intricate and the total length of the boundary portion between the Sn matrix and the intermetallic compound phase be further extended.

Thus, by controlling such abnormally shaped intermetallic compound phase to occupy 50% or more of the total count of abnormally shaped intermetallic compound phases, propagation of fatigue cracks can be readily inhibited to further extend the longevity of the slide member. By configuring the abnormally shaped intermetallic compound phase with a combination of n types of intermetallic compound phases varying in hardness and size, the control of the shape of the abnormally shaped intermetallic compound phase as well as the control of the total length of the boundary portion with the Sn matrix becomes easier. This allows the required performance of the bearing alloy layer to be readily met. The balance of the abnormally shaped intermetallic compound phase(s) may be configured by a single type of intermetallic compound phase.

In one aspect, the abnormally shaped intermetallic compound phase includes aggregates of two or more types of intermetallic compound phases. Among the aggregates of the two or more types of intermetallic compound phases that configure the abnormally shaped intermetallic compound phase, the k th intermetallic compound phase (2≦k≦n) is smaller and harder than the k-1 th intermetallic compound phase, and 75% or more of the total count of the two or more types of intermetallic compound phase includes a second intermetallic compound phase in which 50% or more of the total length of its perimeter serves as a boundary with the Sn matrix when n (n ≧ 2) being the number of types of the intermetallic compound phases configuring the abnormally shaped intermetallic compound phase are defined as the first intermetallic compound phase, ···, n th intermetallic compound phase.

As described above, the abnormally shaped intermetallic compound phase is includes aggregates of two or more types of intermetallic compound phases. The abnormally shaped intermetallic compound phase including aggregates of two or more types of intermetallic compound phases is structurally integral. The k th intermetallic compound phase (2≦k≦n) constituting the abnormally shaped intermetallic compound phase is smaller and harder than the k-1 th intermetallic compound phase. Further, 75% or more of the total count of abnormally shaped intermetallic compound phase each includes a second intermetallic compound phase having the following features. When measured in the aforementioned observation section, 50% or more of the total length of the perimeter of the second intermetallic compound phase serves as a boundary with the Sn matrix and the remaining length of the perimeter serves as the boundary with other intermetallic compound phase(s) that constitute the abnormally shaped intermetallic compound phase. Thus, a portion of the perimeter of the second intermetallic compound phase cut into other intermetallic compound phase(s) that constitute the abnormally shaped intermetallic compound phase while the remaining half or more of the perimeter protrudes toward the Sn matrix.

As a result, it is ensured that the abnormally shaped intermetallic compound phase including such second intermetallic compound phase exhibit an intricate shape and long perimeter. Thus, by configuring the abnormally shaped intermetallic compound phase with an aggregate of two or more types of intermetallic compound phases and allowing 75% or more of such abnormally shaped intermetallic compound phases to have one, or more of the aforementioned second intermetallic compound phase, propagation of fatigue cracks can be reliably inhibited to further extend the longevity of the slide member. The abnormally shaped intermetallic compound phase preferably includes three or more and more preferably includes six or more second intermetallic compound phases.

In one aspect, the bearing alloy layer includes 8.0 to 14.0 mass% of Sb, 1.0 to 10.0 mass% of Ag, and a balance of Sn possibly including unavoidable impurities. An area percentage that the abnormally shaped intermetallic compound phase occupies within the observation section of the bearing alloy layer ranges from 5 to 20%.

The control of the components of the bearing alloy layer in the above described manner facilitates formation of the abnormally shaped intermetallic compound phase. The content of Sb additive preferably ranges from 9.5 to 12.0 mass%. The content of Ag additive preferably ranges from 4.0 to 7.5 mass%. It is further preferable to add 2.0 to 10.0 mass% of Cu. It is yet further preferable to add 0.5 to 3.0 mass% of Ni.

The total area percentage of the abnormally shaped intermetallic compound phase within the bearing alloy layer contributes in improving the fatigue longevity of the bearing alloy layer. By controlling the area percentage that the abnormally shaped intermetallic compound phase occupies within the bearing alloy layer to 5% or greater, propagation of fatigue crack is inhibited more effectively by the abnormally shaped intermetallic compound phase. Controlling the area percentage that the abnormally shaped intermetallic compound phase occupies within the bearing alloy layer to 20% or less works advantageously in improving the toughness of the bearing alloy layer which allows extended longevity of the bearing alloy layer. The above described composition and the area percentage of the abnormally shaped intermetallic compound phase is specified to range from 5 to 20% of the bearing alloy layer for the above described reasons.

In one aspect, the abnormally shaped intermetallic compound phase includes a Sn-Sb phase as a first intermetallic compound phase, and a Sn-Ag phase as a second intermetallic compound phase.

This facilitates formation of an abnormally shaped intermetallic compound phase shaped effectively for inhibiting fatigue crack propagation.

An overlay covering the bearing alloy layer may be provided on one side of the bearing alloy layer located on the far opposite side from the metal back.

The slide member may be employed in a bearing device provided with a shaft serving as the counter element.

### BRIEF DESCRIPTION OF THE DRAWINGS

FIG.1 schematically illustrates an observation section of a slide member according to one embodiment.
FIG.2 is a schematically enlarged view of portion II of FIG.1.
FIG. 3 schematically illustrates an observation section of an abnormally shaped intermetallic compound phase configured by an aggregate of one type of intermetallic compound phase in a slide member according to one embodiment.
FIG. 4 schematically illustrates an observation section of an abnormally shaped intermetallic compound phase configured by an aggregate of two types of intermetallic compound phases of a slide member according to one embodiment.
FIG.5 schematically illustrates a path of propagation of a fatigue crack in an abnormally shaped intermetallic compound phase configured by an aggregate of one type of intermetallic compound phase in a slide member according to one embodiment.
FIG.6 schematically illustrates a path of propagation of a fatigue crack in a conventional slide member.
FIG.7 schematically illustrates a path of propagation of a fatigue crack in an abnormally shaped intermetallic compound phase configured by an aggregate of two types of intermetallic compound phases in a slide member according to one embodiment.
FIG.8 indicates the conditions applied in the fatigue test.
FIG.9 is a chart indicating the relation between the test time of a test piece and the rear surface temperature of the test piece.
FIG.10 is a table indicating the test results.
FIGS.11A and 11B are tables indicating the test results.

### DESCRIPTION

A description will be given hereinafter on an embodiment of a slide member based on the accompanying drawings.

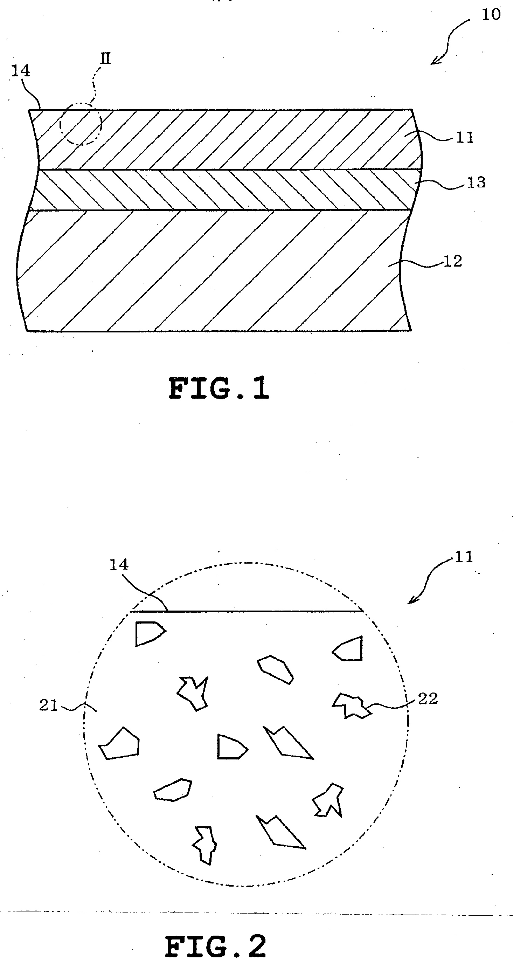

FIG.1 illustrates slide member 10. Slide member 10 is provided with bearing alloy layer 11 and metal back 12. Intermediate layer 13 may be provided between bearing alloy layer 11 and metal back 12. Further, an overlay not shown, that covers bearing alloy layer 11, may be provided over sliding surface 14 of bearing alloy layer 11 located on the far opposite side from metal back 12. Metal back 12 is made of a material such as steel and is molded into a flat sheet, semi-cylindrical/cylindrical shape, or the like. Slide member 10 may be used, for example, as a bearing in internal combustion engines.

Bearing alloy layer 11 is formed of a Sn alloy primarily composed of Sn. Bearing alloy layer 11 includes one or more types of additive elements such as Sb, Cu, Ag, and Ni and a balance of Sn. Bearing alloy layer 11 may include unavoidable impurities. Bearing alloy layer 11 may further include additive elements such as Zr, Ti, and Cr. These additive elements facilitate core formation. By adding small amounts of these additive elements, core formation and core growth of intermetallic compounds occur in close proximity of one another which facilitates formation of aggregates of such intermetallic compounds. Further, additive elements such as Ag, Zn, and Bi form eutectoid structure with Sn. By adding these additive elements, eutectoid structure is formed which prevents the nearby intermetallic compounds from growing only in the direction in which they are prone to grow. As a result, the intermetallic compounds tend to be shaped irregularly. As mentioned earlier, bearing alloy layer 11 has sliding surface 14 formed on the far opposite side from bearing alloy layer 12. Slide member 10 provided with bearing alloy layer 11 slides with the counter element not shown such as a shaft made of steel, cast iron, or the like, on this sliding surface 14.

As shown in FIG.2, bearing alloy layer 11 includes Sn matrix 21 and abnormally shaped intermetallic compound phase 22. Sn matrix 21 is a matrix comprising Sn that constitute bearing alloy layer 11. Abnormally shaped intermetallic compound phase 22 is dispersed in Sn matrix 21. Abnormally shaped intermetallic compound phase 22 is observed in an observation section which is a given cross section of bearing alloy layer 11. The observation section corresponds to the "cross section" recited in the claims of the present disclosure and extends in the direction parallel to the direction oriented toward bearing alloy layer 11 from metal back 12. In this specification, abnormally shaped intermetallic compound phase 22 is defined as an intermetallic compound phase in which D is equal to or greater than 80 µm and Lc/D is equal to or greater than 350% when Lc represents the perimeter, in other words, a peripheral length of the intermetallic compound phase within the observation section and D represents the diameter of the circumscribing circle of the intermetallic compound phase within the observation section.

Thus, abnormally shaped intermetallic compound phase 22 has perimeter Lc which is sufficiently long with respect to its size and which is sufficiently longer than the circumference of its circumscribing circle. As a result, the boundary of abnormally shaped intermetallic compound phase 22 and Sn matrix 21 is intricately contoured as compared to conventional structures. In summary, abnormally shaped intermetallic compound phase 22 exhibits a shape which is irregular as compared to the circular, rectangular, or the needle-like shapes of a phase comprising crystal grains of intermetallic compounds in general. The size of abnormally shaped intermetallic compound phase 22 is configured so that diameter D of its circumscribing circle is equal to or greater than 80 µm. Further, abnormally shaped intermetallic compound phase 22 preferably occupies 5 to 20% of the observation section of bearing alloy layer 11 in area percentage.

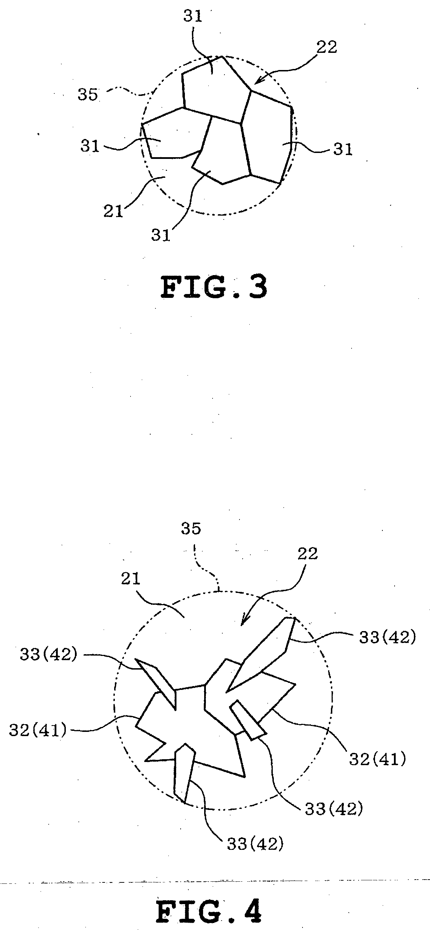

Bearing alloy layer 11 includes one or more types of intermetallic compound phases. From a manufacturing stand point, abnormally shaped intermetallic compound phase 22 is preferably configured as an aggregate of intermetallic compound phases when bearing alloy layer 11 includes intermetallic compound phases. For example, when abnormally shaped intermetallic compound phase 22 is configured by one type of intermetallic compound phase, abnormally shaped intermetallic compound phase 22 is configured by an aggregate of intermetallic compound phases 31 of the same type which are structurally integral as shown in FIG.3. As shown in FIG.3, an imaginary circumscribing circle 35 is specified to abnormally shaped intermetallic compound phase 22. The diameter of this circumscribing circle 35 is the above described diameter D.

Further, when abnormally shaped intermetallic compound phase 22 is configured by two types of intermetallic compound phases, abnormally shaped intermetallic compound phase 22 is configured by an aggregate of two types of intermetallic compound phases 32 and 33 which are structurally integral as shown in FIG.4. As shown in FIG.4, imaginary circumscribing circle 35 is specified to abnormally shaped intermetallic compound phase 22. The diameter of this circumscribing circle 35 is the above described diameter D.

Similarly, when abnormally shaped intermetallic compound phase 22 is configured by three or more types of intermetallic compound phases, abnormally shaped intermetallic compound phase 22 is configured by an aggregate of intermetallic compound phases which are structurally integral as was the case for one-type and two-type intermetallic compound phases.

The intermetallic compound phase that constitute abnormally shaped intermetallic compound phase 22 varies depending upon the type of elements added to bearing alloy layer 11.

When bearing alloy layer 11 includes abnormally shaped intermetallic compound phase 22 including two types of intermetallic compound phases, bearing, alloy layer 11 may comprise a mixture of abnormally shaped intermetallic compound phase 22 including two types of intermetallic compound phases and abnormally shaped intermetallic compound phase 22 including one type of intermetallic compound phase.

Similarly, when bearing alloy layer 11 includes abnormally shaped intermetallic compound phase 22 including three or more types of intermetallic compound phases, bearing alloy layer 11 may comprise a mixture of abnormally shaped intermetallic compound phase 22 including three or more types of intermetallic compound phases and abnormally shaped intermetallic compound phase 22 including less than 3 types of intermetallic compound phase.

When abnormally shaped intermetallic compound phase 22 includes two or more types of intermetallic compound phases, the intermetallic compound phase having a greater sectional area in the observation section is softer than the intermetallic compound phase having a smaller sectional area in the observation section. More specifically, when abnormally shaped intermetallic compound phase 22 is includes aggregates of two or more types of intermetallic compound phases, the intermetallic compound phases constituting the abnormally shaped intermetallic compound phase 22 is represented as a first intermetallic compound phase, ···, nth intermetallic compound phase (n≧2). Among the intermetallic compound phases that aggregate into abnormally shaped intermetallic compound phase 22, the first intermetallic compound phase has the largest area within the observation section and is the softest. A second intermetallic compound phase is second to the first intermetallic compound phase in the size of the area within the observation section and softness. In other words, among the n types of intermetallic compound phases, the k th intermetallic compound phase (2≧k≧n) is smaller than the k-1 th intermetallic compound phase. The second intermetallic compound phase preferably contacts the first intermetallic compound phase.

In one embodiment, 50% or more of the total count of abnormally shaped intermetallic compound phases 22 includes aggregates of two or more types of intermetallic compound phases in a slide member comprising abnormally shaped intermetallic compound phases 22 including two or more types of intermetallic compound phases. This means that when 55% of the total count of abnormally shaped intermetallic compound phases 22 includes aggregates of two or more types of intermetallic compound phases, for example, the remaining 45% is configured by aggregates of one type of intermetallic compound phase or a single intermetallic compound phase. Preferably, 60% or more of the total count of abnormally shaped intermetallic compound phases 22 includes aggregates of two or more types of intermetallic compound phases.

FIG. 4 shows abnormally shaped intermetallic compound phase 22 including two types of intermetallic compound phase which are represented as first intermetallic compound phase 41 and second intermetallic compound phase 42. In 75% or more of the total count of such abnormally shaped intermetallic compound phases 22 including aggregates of two or more types of intermetallic compound phases, 50% or more of the total length of the perimeter of second intermetallic compound phase 42 contacts the Sn matrix. That is, 50% or more of the total length of the perimeter of second intermetallic compound phase 42 within the observation section serves as the boundary with Sn matrix 21 and the remainder serves as the boundary with first intermetallic compound phase 41. In other words, within the observation section, Bt/Ct is equal to or greater than 50% when the total length of the perimeter of second intermetallic compound phase 42 is represented by Ct and the total length of the boundary portion of second intermetallic compound phase 42 with Sn matrix 21 is represented by Bt. Thus, a portion of second intermetallic compound phase 42 contacts and cuts into first compound phase 41 and the remainder occupying 50% or more in length contacts Sn matrix 21. Thus, abnormally shaped intermetallic compound phase 22 including first intermetallic compound phase 41 and second intermetallic compound phase 42 exhibits a perimeter which is long and intricate.

Similarly, in a slide member comprising abnormally shaped intermetallic compound phases 22 including three or more types of intermetallic compound phases, 75% or more of the total count of abnormally shaped intermetallic compound phases 22 including aggregates of two or more types of intermetallic compound phases has a second intermetallic compound phase in which 50% or more of the total length of its perimeter serves as the boundary with the Sn matrix.

As described above, in a slide member comprising abnormally shaped intermetallic compound phases 22 including two or more types or three or more types of intermetallic compound phases, 75% or more of the total count of abnormally shaped intermetallic compound phases 22 including aggregates of two or more types of intermetallic compound phases has a second intermetallic compound phase in which 50% or more of the total length of its perimeter serves as the boundary with the Sn matrix. In other words, within the observation section, m/Mt≧75% when the total count of abnormally shaped intermetallic compound phases 22 including aggregates of two or more types of intermetallic compound phases within bearing alloy layer 11 is represented by "Mt" and the count of abnormally shaped intermetallic compound phases 22 including second intermetallic compound phase in which 50% or more of the total length of its perimeter serves as the boundary with the Sn matrix is represented by "m".

Next, a description will be given on how slide member 10 of the present embodiment inhibits propagation of fatigue cracks.

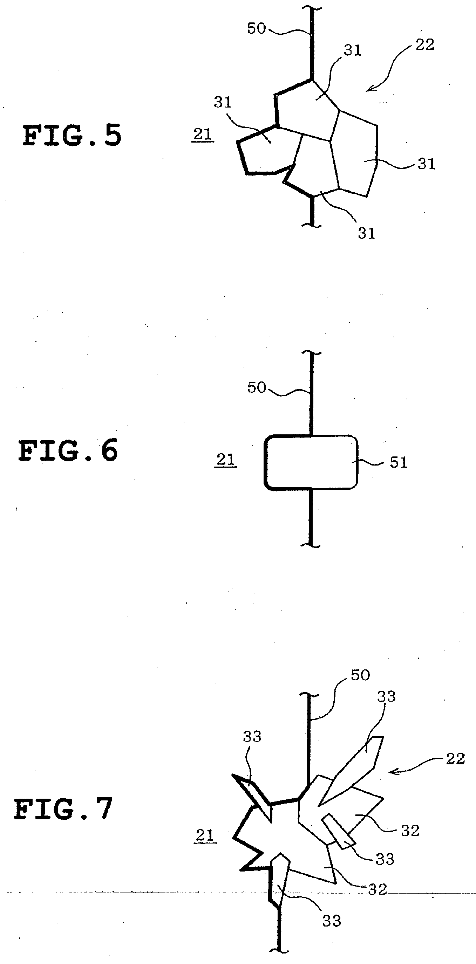

First, a description will be given on how the abnormally shaped intermetallic compound phase formed of an aggregate of one type of intermetallic compound phase shown in FIG.5 inhibits the propagation of fatigue cracks. In the examples shown in FIGS. 4 to 6, sliding surface 14 is located in a direction upward relative to the figures and metal backing 12 is located in a direction downward relative to the figures.

When the upper side of FIG. 5 is deemed as sliding surface 14, fatigue crack 50 indicated by bold solid line propagates in the thickness direction of bearing alloy layer 11 toward metal back 12 from sliding surface 14 as the result of fatigue. When fatigue crack 50 propagating through Sn matrix 21 from sliding surface 14 reaches abnormally shaped intermetallic compound phase 22, it is expected to propagate along the boundary of Sn matrix 21 and abnormally shaped intermetallic compound phase 22. In a conventional slide member, one example of which is illustrated in FIG.6, the shape of the cross section of intermetallic compound phase 51 is simple. Thus, fatigue crack 50 propagating through Sn matrix 21 further propagates along the boundary of Sn matrix 21 and intermetallic compound phase 51 and readily reaches metal back 12 side.

In the present embodiment illustrated in FIG.5, fatigue crack 50 propagating through Sn matrix 21 from sliding surface 14 further propagates along intricate and sufficiently long boundary of abnormally shaped intermetallic compound phase 22 and Sn matrix 21. Thus, the path of propagation of fatigue crack 50 is not only more intricate but also longer compared to the conventional structure. As a result, fatigue crack 50 propagating through Sn matrix 21 is inhibited from further propagation by abnormally shaped intermetallic compound phase 22 within bearing alloy layer 11. Thus, it is believed that the time required for fatigue crack 50 in reaching metal back 12 from sliding surface 14 of bearing alloy layer 11 is extended.

Next, a description will be given on how propagation of fatigue cracks is inhibited by abnormally shaped intermetallic compound phase 22 through an example of abnormally shaped intermetallic compound phase 22 which is formed of aggregates of the two types of intermetallic compound phases illustrated in FIG.7.

By forming abnormally shaped intermetallic compound phase 22 by aggregates of two types of intermetallic compound phases 32 and 33, it becomes even easier to make the boundary portion of abnormally shaped intermetallic compound phase 22 and Sn matrix 21 intricate as compared to abnormally shaped intermetallic compound phase 22 formed of aggregates of one type of intermetallic compound phase. This is because multiple types of intermetallic compound phases varying in shape and in the direction in which they are prone to grow can be selectively combined. As a result, fatigue crack 50, reaching abnormally shaped intermetallic compound phase 22 after having propagated through Sn matrix 21, further propagates along a more intricate path and thus, is inhibited from propagating toward metal back 12. Thus, it is believed that the time required for fatigue crack 50 in reaching metal back 12 from sliding surface 14 of bearing alloy layer 11 is further extended.

Next, a description will be given on the process flow for manufacturing the above described slide member 10.

Bearing alloy layer 11 is formed on the surface of metal back 12. Intermediate layer 13 may be formed between metal back 12 and bearing alloy layer 11. Bearing alloy layer 11 is cast on the surface of metal back 12 by centrifugal casting. The cooling temperature during casting of bearing alloy layer 11 is controlled by cooling the rear surface of the metal back with water. More specifically, preheated metal backing 12 is placed in a casting machine not shown and bearing alloy layer 11 is cast by rotating metal backing 12 with the casting machine. The cooling speed of bearing alloy layer 11 during casting was controlled through adjustment of conditions such as the preheating temperature of metal back 12, the temperature of melt bearing alloy layer 11, the temperature during casting, the amount of supply of bearing alloy layer 11 during casting, and the amount of cooling water.

For example, when one type of intermetallic compound phase 31 is precipitated in bearing alloy layer 11, small amount of additive elements that facilitate the formation of core of the intermetallic compound phase such as Zr, Ti, and Cr are preferably added. The additive elements cause the core of intermetallic compounds to form and grow in close proximity of one another. This facilitates the formation of abnormally shaped intermetallic compound phase 22 configured by aggregates of intermetallic compound phases 31. Multiplicity of cores are formed in Sn matrix 21 by quenching bearing alloy layer 11 including the additive elements to a temperature zone in which crystallization of intermetallic compound phases 31 takes place. By gradually cooling bearing alloy layer 11 in the temperature zone in which core formation took place, formation of abnormally shaped intermetallic compound phase 22 configured by aggregates of intermetallic compound phases 31 is facilitated.

When precipitating two types of intermetallic compound phases, namely first intermetallic compound phase 41 and second intermetallic compound phase 42 in bearing alloy layer 11, bearing alloy layer 11 is preferably quenched in the temperature zone in which crystallization and growth of both first intermetallic compound phase 41 and second intermetallic compound phase 42 takes place at the same time. Thus, first intermetallic compound phase 41 grows to the target size and second intermetallic compound phase 42 precipitates in contact with first intermetallic compound phase 41. The etched structure of a given observation section of the cast bearing alloy layer 11 was observed by an optical microscope in the desired magnification, and measurements such as diameter D of circumscribing circle 35 of abnormally shaped intermetallic compound phase 22 and perimeter Lc of abnormally shaped intermetallic compound phase 22 was obtained.

Next, the working and the advantages of the slide member is described based on EXAMPLES 1 to 21 and COMPARATIVE EXAMPLES 1 and 2.

### (Bearing Longevity Evaluation Test)

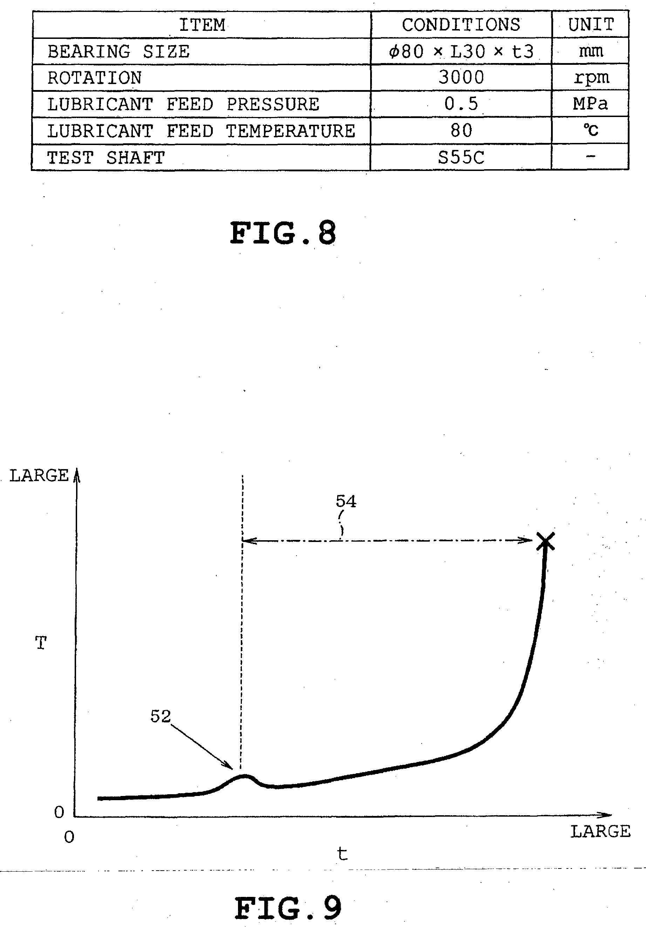

The longevity, in this case, the time to seizure was verified for EXAMPLES 1 to 21 and COMPARATIVE EXAMPLES 1 and 2 under the test conditions indicated in FIG. 8. The later described fatigue test and endurance test were conducted as the bearing longevity evaluation test. Samples of slide member 10 were prepared as test pieces which were identified as EXAMPLES 1 to 21 and COMPARATIVE EXAMPLES 1 and 2. The test pieces were each provided with bearing alloy layer 11 and metal back 12 and formed into a semi-cylindrical shape. These test pieces were each 80 mm in inner diameter, 30 mm in axial length, 3 mm in overall thickness, and provided with bearing alloy layer which was 1.0 mm thick.

In the fatigue test and endurance test, the shaft serving as the counter element was made of S55C, and the tests were conducted at the rotation of 3000 rpm, lubricant feed pressure of 0.5 MPa, and lubricant temperature of 80 degrees Celsius. The fatigue test was carried out prior to the endurance test in order to find the specific load in which fatigue crack occurs. The fatigue test was conducted in the form of a dynamic load test of 20 hours in duration. The specific load in which the fatigue crack was observed was specified as the specific load applied in the endurance test. The ratio of the specified specific load and hardness of the samples hardly varied throughout the test. Thus, the influence of the specified specific load on longevity was substantially eliminated. The endurance test was carried out with the specified specific load for each of the samples.

In the endurance test, a small peak was observed in the rear surface temperature of the test pieces, in other words, the temperature of metal back 12 originating from the occurrence of fatigue crack as schematically indicated in FIG.9. The lateral axis t represents "time" and the vertical axis T represents the "rear surface temperature". In FIG.9, reference symbol 52 represents the peak observed by the occurrence of fatigue crack. Further, in FIG.9, reference symbol 54 indicates the time to seizure from the occurrence fatigue crack. The rear surface temperatures of the test pieces gradually elevated after fatigue crack was formed. In the endurance test of the present embodiment, seizure was deemed to have occurred when the rear surface temperatures of the test pieces exceeded 200 degrees Celsius. Thus, in the bearing longevity evaluation test, the time to seizure measured from the occurrence of fatigue crack was evaluated as the bearing longevity.

### (Effect of abnormally shaped intermetallic compound phase)

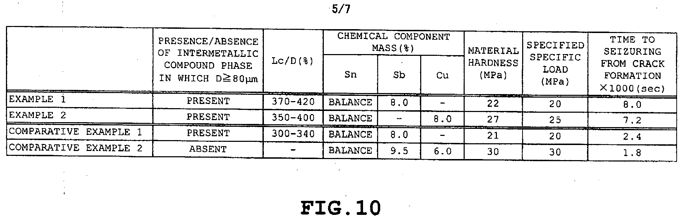

First, the effect of the presence/absence of abnormally shaped intermetallic compound phase 22 in bearing alloy layer 11 was verified. As shown in FIG. 10, EXAMPLES 1 and 2 both include abnormally shaped intermetallic compound phase 22 in which diameter D of its circumscribing circle 35 is equal to or greater than 80 µm, and the ratio of diameter D circumscribing circle 35 and perimeter Lc of abnormally shaped intermetallic compound phase 22 is equal to or greater than 350%. In contrast, COMPARATIVE EXAMPLE 1 includes an intermetallic compound phase in which diameter D of the circumscribing circle is equal to or greater than 80 µm. However, the ratio of diameter D of circumscribing circle 35 and perimeter Lc is less than 350%. Thus, COMPARATIVE EXAMPLE 1 does not include abnormally shaped intermetallic compound phase 22 as defined in the present embodiment. COMPARATIVE EXAMPLE 2 does not include an intermetallic compound phase which is equal to or greater than 80 µm.

Comparison of EXAMPLES 1 and 2 with COMPARATIVE EXAMPLES 1 and 2 shows that there are no significant differences in the specific load in which fatigue crack occurs. However, there is a huge difference in the time to seizure from the occurrence of fatigue crack, in other words, the bearing longevity. This is believed to be attributable to the fatigue crack propagation being inhibited by abnormally shaped intermetallic compound phase 22 dispersed in bearing alloy layer 11 as discussed above. Thus, it was found that diameter D of circumscribing circle 35 of abnormally shaped intermetallic compound phase 22 need to be equal to or greater than 80 µm, and that Lc/D need to be equal to or greater than 350% for extending longevity in a slide member provided with a metal back and a bearing alloy layer formed of an alloy primarily composed of Sn.

Comparison of EXAMPLES 1 and 2 shows that EXAMPLES 1 and 2 differ in that in EXAMPLE 1, the composition of bearing alloy layer 11 includes Sb, whereas in EXAMPLE 2, the composition of bearing alloy layer 11 includes Cu. In other words, in EXAMPLE 1, the intermetallic compound phase that constitute abnormally shaped intermetallic compound phase 22 is Sn-Sb, whereas in EXAMPLE 2, the intermetallic compound phase that constitute abnormally shaped intermetallic compound phase 22 is Sn-Cu. (Effect of abnormally shaped intermetallic compound phase in detail)

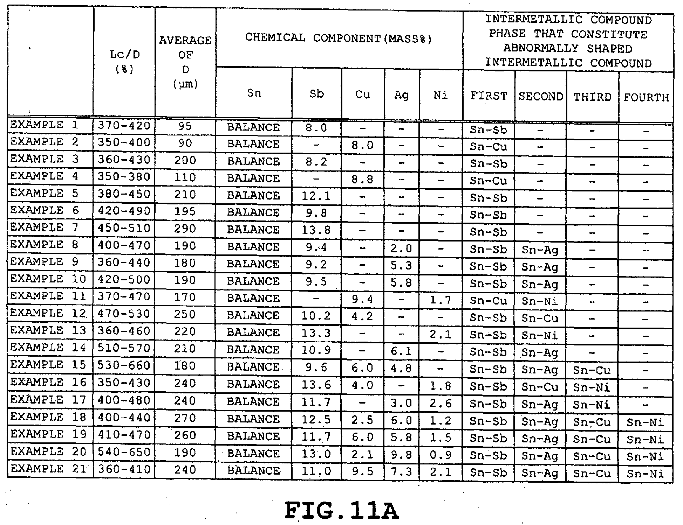

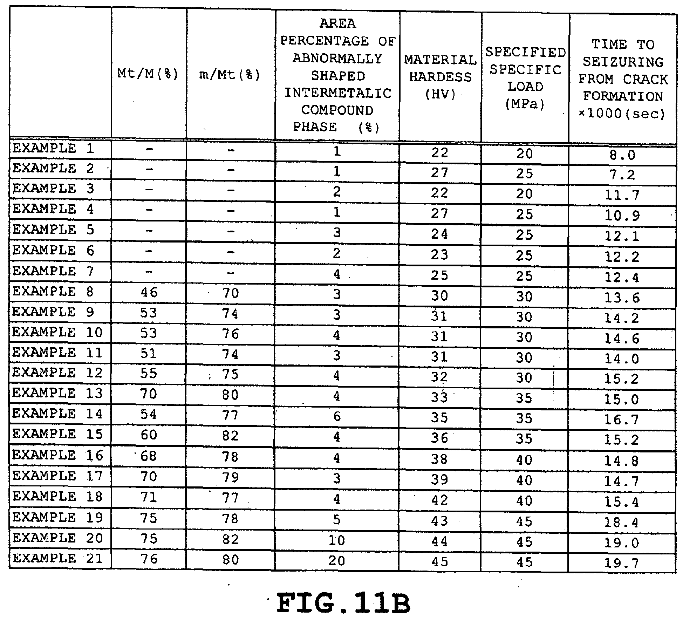

Next, effects attributable to abnormally shaped intermetallic compound phase 22 were verified in detail as indicated in FIGS. 11A and 11B. The following are the effects which were verified.
(1) The types of intermetallic compound phases that constitutes abnormally shaped intermetallic compound phase 22.
(2) The ratio of the count of abnormally shaped intermetallic compound phases 22 being including aggregates of two or more types of intermetallic compound phases.
(3) The ratio of the count of abnormally shaped intermetallic compound phases 22 in which the percentage of the length of boundary with the Sn-matrix relative to the total length of the perimeter of second intermetallic compound phase 42 is equal to or greater than 50% among abnormally shaped intermetallic compound phase 22 which includes aggregates of two or more types of intermetallic compound phases.
(4) The area percentage occupied by abnormally shaped intermetallic compound phase 22 in the bearing alloy layer.

Each of EXAMPLES 1 to 7 includes either Sn-Sb or Sn-Cu as abnormally shaped intermetallic compound phase 22.

In contrast, EXAMPLES 8 to 10 and EXAMPLE 14 include Sn-Sb as first intermetallic compound phase 41 and Sn-Ag as second intermetallic compound phase 42 that constitute abnormally shaped intermetallic compound phase 22. Similarly, EXAMPLE 11 includes Sn-Cu as first intermetallic compound phase 41 and Sn-Ni as second intermetallic compound phase 42. EXAMPLE 12 includes Sn-Sb as first intermetallic compound phase 41 and Sn-Cu as second intermetallic compound phase 42. EXAMPLE 13 includes Sn-Sb as first intermetallic compound phase 41 and Sn-Ni as second intermetallic compound phase 42.

Each of EXAMPLES 15 to 17 includes the later described three types of intermetallic compound phases as abnormally shaped intermetallic compound phase 22. EXAMPLES 18 to 21 include the later described four types of intermetallic compound phases as abnormally shaped intermetallic compound phase 22. More specifically, EXAMPLE 15 includes Sn-Sb as a first intermetallic compound phase, Sn-Ag as a second intermetallic compound phase, and Sn-Cu as a third intermetallic compound phase. EXAMPLE 16 includes Sn-Sb as a first intermetallic compound phase, Sn-Cu as a second intermetallic compound phase, and Sn-Ni as a third intermetallic compound phase. EXAMPLE 17 includes Sn-Sb as a first intermetallic compound phase, Sn-Ag as a second intermetallic compound phase, and Sn-Ni as a third intermetallic compound phase. Each of EXAMPLES 18 to 21 includes Sn-Sb as a first intermetallic compound phase, Sn-Ag as a second intermetallic compound phase, and Sn-Cu as a third intermetallic compound phase, and Sn-Ni as a fourth intermetallic compound phase. Typical hardness of Sn-Sb, Sn-Ag, Sn-Cu, and Sn-Ni are 100HV, 200HV, 300HV, and 500HV, respectively.

It can be understood from EXAMPLES 1 to 21 that longevity tend to be extended as the number of types of intermetallic compound phases that constitute abnormally shaped intermetallic compound phase 22 increases. This is believed to originate from the shape of abnormally shaped intermetallic compound phase 22 becoming intricate as the number of types of intermetallic compound phases that constitute abnormally shaped intermetallic compound phase 22 increases as compared to when there are small number of types of intermetallic compound phases that constitute abnormally shaped intermetallic compound phase 22 as can be understood from the comparison of FIG.5 and 7. When the shape of abnormally shaped intermetallic compound phase 22 becomes intricate, the path in which the fatigue crack propagates becomes intricate and the length of the path is consequently extended. Thus, the propagation of the fatigue crack is effectively inhibited. It was further found that the hardness of bearing alloy layer 11 tends to increase with the increase in the number of types of intermetallic compound phases that constitute abnormally shaped intermetallic compound phase 22.

Diameter D of circumscribing circle 35 of abnormally shaped intermetallic compound phase 22 is as indicated in EXAMPLES 1 to 21 in FIGS.11A and 11B. More specifically, in EXAMPLE 1, Lc/D of abnormally shaped intermetallic compound phase 22 within the observation section ranged from 3.7 to 4.2 (370 to 420% in percentage representation) and averaged 4.0. The average of D was 95 (µm). In EXAMPLE 21, Lc/D ranged from 3.6 to 4.1 (360 to 410% in percentage representation) and averaged 3.9. The average of D was 240 (µm). Mt/M was 0.76 (76% in percentage representation), m/Mt was 0.80 (80% in percentage representation), and S was 20 (%) . M, Mt, m, and S will be later described.

It can be understood from FIGS.11A and 11B that longevity tend to be extended as diameter D of circumscribing circle 35 is increased. As earlier verified based on FIG.10, it is thus, believed that diameter D of circumscribing circle 35 of abnormally shaped intermetallic compound phase 22 needs to be 80 µm or greater in order to extend the longevity of bearing alloy layer 11. When diameter D of circumscribing circle 35 is less than 80 µm, it is difficult to inhibit the propagation of fatigue crack because the total length of the path of fatigue crack propagation is still too short even when the path is made intricate by abnormally shaped intermetallic compound phase 22. Especially according to EXAMPLES 3 to 21, Lc/D is preferably 350% or greater and average of diameter D of circumscribing circle 35 preferably ranges from 100 µm to 300 µm in order to improve longevity. Thus, diameter D of circumscribing circle 35 of abnormally shaped intermetallic compound phase 22 is preferably specified to be equal to or greater than 100 µm and equal to or less than 300 µm.

When bearing alloy layer 11 includes two or more types of intermetallic compound phases, bearing alloy layer 11 may include an abnormally shaped intermetallic compound phase which includes aggregates of two or more types of intermetallic compound phases.

The effect of the ratio that count Mt of abnormally shaped intermetallic compound phase 22 including aggregates of two or more types of intermetallic compound phases occupies in total count M of abnormally shaped intermetallic compound phase 22 was verified through EXAMPLES 8 to 21 in bearing alloy layer 11 including abnormally shaped intermetallic compound phase 22 including by aggregates of two or more types of intermetallic compound phases.

It can be understood from the verification of EXAMPLES 8 to 21 that longevity improves as the ratio that the count of abnormally shaped intermetallic compound phase 22 including aggregates of two or more types of intermetallic compound phases (Mt) occupies in the total count of abnormally shaped intermetallic compound phase 22 (M) within the observation section increases.

For example, the comparison of EXAMPLES 8 and 9 shows that there is no significant difference between parameters such as diameter D of circumscribing circle 35 but that there is a huge difference in bearing longevity. Thus, it can be understood that the ratio (Mt/M) of the count of abnormally shaped intermetallic compound phase 22 including aggregates of two or more types of intermetallic compound phases that occupies total count of abnormally shaped intermetallic compound phase 22 is preferably equal to or greater than 0.5 (50% or greater in percentage representation). This may be explained by the fact that there is a higher possibility of the propagation path of the fatigue crack becoming longer as the ratio of the count of abnormally shaped intermetallic compound phase 22 including aggregates of two or more types of intermetallic compound phases becomes higher.

The effect of the ratio that count of abnormally shaped intermetallic compound phase 22 including the later described second intermetallic compound phase 42 occupies in the total count of abnormally shaped intermetallic compound phase 22 including aggregates of two or more types of intermetallic compound phases was verified through EXAMPLES 8 to 21. More specifically, the effect of m/Mt on longevity was verified when :
"Mt" represents the total count of abnormally shaped intermetallic compound phase 22 including aggregates of two or more types of intermetallic compound phases within the observation section, and
"m" represents count of abnormally shaped intermetallic compound phase 22 including the later described second intermetallic compound phase 42 within the observation section.

FIG.4 shows an example of abnormally shaped intermetallic compound phase 22 including two types of intermetallic compound phases, one of which is second intermetallic compound phase 42. As described earlier, second intermetallic compound phase 42 is defined as an intermetallic compound phase in which ratio of Bt/Ct in percentage representation is equal to greater than 50%. As mentioned earlier, Ct represents the total length of the perimeter of second intermetallic compound phase 42 and Bt represents the total length of the boundary portion of second intermetallic compound phase 42 with Sn matrix 21.

It can be understood from EXAMPLES 8 to 21 that the longevity of slide member 10 tend to improve as the ratio in which the above described second intermetallic compound phase 42 occupies within abnormally shaped intermetallic compound phase 22 increases, in other words, as the ratio (m/Mt) of second intermetallic compound phase 42 having Bt/Ct equal to or greater than 50% increases within abnormally shaped intermetallic compound phase 22 including aggregates of two or more types of intermetallic compound phases increases. It is especially preferable to configure m/Mt to 0.75 or greater (75% or greater in percentage representation).

This is believed to originate from second intermetallic compound phase 42 having Bt/Ct of 50% or greater protruding in large amount toward Sn matrix 21 from first intermetallic compound phase 41 side as shown in FIG.4. Protrusion of second intermetallic compound phase 42 in large amount toward Sn matrix 21 renders the shape of abnormally shaped intermetallic compound phase 22 even more intricate and increases the total length of the boundary portion with Sn matrix 21.

As a result, not only is the path of fatigue crack rendered intricate or oriented back toward sliding surface 14, but also extended in its length. By increasing the number of such abnormally shaped intermetallic compound phases 22, it is believed that the extension of the path of fatigue crack propagation is facilitated and the longevity of the bearing is improved more effectively. The same is true when abnormally shaped intermetallic compound phase 22 includes three or more types of intermetallic compound phases. Thus, it is believed that propagation of the fatigue crack is inhibited efficiently.

Further, the effect of the area percentage of abnormally shaped intermetallic compound phase 22 on longevity was verified based on EXAMPLES 1 to 21. It is clear from these EXAMPLES that longevity tends to improve with increase in the area percentage of abnormally shaped intermetallic compound phase 22 within the observation section of bearing alloy layer 11. This originates from the increased possibility of abnormally shaped intermetallic compound phase 22 existing on the extension of fatigue crack propagation when the area percentage of abnormally shaped intermetallic compound phase 22 increases.

It is thus, believed that fatigue crack propagation in bearing alloy layer 11 is inhibited more easily by abnormally shaped intermetallic compound phase 22. The longevity of slide member 10 was exceptionally improved when area percentage S(%) of abnormally shaped intermetallic compound phase 22 was controlled to 5% or greater.

The inventors of the present invention further found that it is particularly preferable to control the structure of the bearing alloy layer so that "average of (Lc/D)xaverage of D" is equal to or greater than 400 for improvement of bearing longevity. It was further found that it is preferable to control the structure of the bearing alloy layer so that "average of (Lc/D) ×average of D× (Mt/M) × (m/Mt) ×S" is equal to or greater than 800 and even more preferable when controlled to 2500 or greater for improvement of bearing longevity when the bearing alloy layer is provided with abnormally shaped intermetallic compound phase including aggregates of two or more types of intermetallic compound phases.

For example, in EXAMPLE 14, the above mentioned calculation amounts to 5.4×210×0.54×0.77×6≒2830 which exhibited better bearing longevity as compared to 2020 of EXAMPLE 13.

Similar tendency was observed when an overlay was provided over bearing alloy layer 11.

A bearing device provided with the above described slide member 10 as well as a shaft serving as a counter element is suitable for use over long period of time.

The foregoing description and drawings are merely illustrative of the principles of the present invention and are not to be construed in a limited sense. Various changes and modifications will become apparent to those of ordinary skill in the art. All such changes and modifications are seen to fall within the scope of the invention as defined by the appended claims.

## Claims

1. A slide member (10) comprising:
a metal back (12); and
a bearing alloy layer (11) provided over the metal back and comprising a Sn-based alloy;
wherein the bearing alloy layer includes:
a Sn matrix (21), and
an abnormally shaped intermetallic compound phase (22) dispersed in the Sn matrix in which D≧80 µm and Lc/D≧ 350% when Lc represents a perimeter of the abnormally shaped intermetallic compound phase within a cross section of the bearing alloy layer and D represents a diameter of a circumscribing circle of the abnormally shaped intermetallic compound phase within the cross section
wherein a boundary portion between the abnormally shaped intermetallic compound phase and the Sn matrix runs in a complex convexo-concave shape.

2. The slide member according to claim 1, wherein an average of the diameter D of the circumscribing circle of the abnormally shaped intermetallic compound phase (22) ranges from 100 µm to 300 µm.

3. The slide member according to claim 1 or 2, wherein 50% or more of a total count of the abnormally shaped intermetallic compound phase (22) includes aggregates of two or more types of intermetallic compound phases and
wherein among the aggregates of the two or more types of intermetallic compound phases that configure the abnormally shaped intermetallic compound phase, a k th intermetallic compound phase (2≦k≦n) is smaller and harder than a k-1 th intermetallic compound phase, and a second intermetallic compound phase contacts a first intermetallic compound phase, when n(n ≧ 2) being the number of types of the intermetallic compound phases configuring the abnormally shaped intermetallic compound phase and are defined as the first intermetallic compound phase, n th intermetallic compound phase.

4. The slide member according to any of claims 1 to 3, wherein the abnormally shaped intermetallic compound phase (22) includes aggregates of two or more types of intermetallic compound phases and
wherein among the aggregates of the two or more types of intermetallic compound phases that configure the abnormally shaped intermetallic compound phase, a k th intermetallic compound phase (2≦k≦n) is smaller and harder than a k-1 th intermetallic compound phase, and
wherein 75% or more of the total count of the aggregates of two or more types of intermetallic compound phases includes a second intermetallic compound phase in which 50% or more of the total length of a perimeter thereof serves as a boundary with the Sn matrix, when n (n≧2) being the number of types of the intermetallic compound phases configuring the abnormally shaped intermetallic compound phase and are defined as the first intermetallic compound phase, ···, n th intermetallic compound phase.

5. The slide member according to any of claims 1 to 4, wherein the bearing alloy layer (11) includes 8.0 to 14.0 mass% of Sb, 1.0 to 10.0 mass% of Ag, and a balance of Sn, and wherein an area percentage that the abnormally shaped intermetallic compound phase (22) occupies within the cross section of the bearing alloy layer ranges from 5 to 20%.

6. The slide member according to any of claims 1 to 5, wherein the abnormally shaped intermetallic compound phase (22) includes a Sn-Sb phase as a first intermetallic compound phase, and a Sn-Ag phase as a second intermetallic compound phase.

7. The slide member according to any of claims 1 to 6, further comprising an overlay covering a first surface of the bearing alloy layer (11) opposite a second surface of the bearing alloy layer (13), which overlies the metal back (12).

8. A bearing device provided with the slide member (10) according to any of claims 1 to 7.

## Patentansprüche

1. Gleitelement (10), umfassend:
einen Metallrücken (12) und
eine über dem Metalldrücken bereitgestellte Lagerlegierungsschicht (11), die eine Snhaltigen Legierung umfasst;
wobei die Lagerlegierungsschicht Folgendes umfasst:
eine Sn-Matrix (21) und
eine anormal geformte intermetallische Verbindungsphase (22), die in der Sn-Matrix dispergiert ist, wobei D ≧ 80 µm und Lc/D ≧ 350 %, wenn Lc für einen Umfang der anormal geformten intermetallischen Verbindungsphase innerhalb eines Querschnitts der Lagerlegierungsschicht steht und D für einen Durchmesser eines umschreibenden Kreises der anormal geformten intermetallischen Verbindungsphase innerhalb des Querschnitts steht,
wobei ein Grenzabschnitt zwischen der anormal geformten intermetallischen Verbindungsphase und der Sn-Matrix in einer komplexen konvex-konkaven Form verläuft.

2. Gleitelement nach Anspruch 1, wobei ein Mittelwert des Durchmessers D des umschreibenden Kreises der anormal geformten intermetallischen Verbindungsphase (22) im Bereich von 100 µm bis 300 µm liegt.

3. Gleitelement nach Anspruch 1 oder 2, wobei 50 % oder mehr einer Gesamtmenge der anormal geformten intermetallischen Verbindungsphase (22) Aggregate aus zwei oder mehr Arten von intermetallischen Verbindungsphasen aufweisen und
wobei unter den Aggregaten aus den zwei oder mehr Arten von intermetallischen Verbindungsphasen, aus denen die anormal geformte intermetallische Verbindungsphase gebildet ist, eine k-te intermetallische Verbindungsphase (2 ≦ k ≦ n) kleiner und härter als eine k-1-te intermetallische Verbindungsphase ist und eine zweite intermetallische Verbindungsphase mit einer ersten intermetallischen Verbindungsphase in Kontakt kommt, wenn n(n ≧ 2), was für die Anzahl von Arten der intermetallischen Verbindungsphasen steht, aus denen die anormal geformte intermetallische Verbindungsphase gebildet ist und die definiert sind als die erste intermetallische Verbindungsphase, ..., n-te intermetallische Verbindungsphase.

4. Gleitelement nach einem der Ansprüche 1 bis 3, wobei die anormal geformte intermetallische Verbindungsphase (22) Aggregate aus zwei oder mehr Arten von intermetallischen Verbindungsphasen aufweist und
wobei unter den Aggregaten aus den zwei oder mehr Arten von intermetallischen Verbindungsphasen, aus denen die anormal geformte intermetallische Verbindungsphase gebildet ist, eine k-te intermetallische Verbindungsphase (2 ≦ k ≦ n) kleiner und härter als eine k-1-te intermetallische Verbindungsphase ist und
wobei 75 % oder mehr der Gesamtmenge der Aggregate aus zwei oder mehr Arten von intermetallischen Verbindungsphasen eine zweite intermetallische Verbindungsphase aufweisen, bei der 50 % oder mehr der Gesamtlänge eines Umfangs davon als Grenze zur Sn-Matrix dienen, wenn n(n ≧ 2), was für die Anzahl von Arten der intermetallischen Verbindungsphasen steht, aus denen die anormal geformte intermetallische Verbindungsphase gebildet ist und die definiert sind als die erste intermetallische Verbindungsphase, ..., n-te intermetallische Verbindungsphase.

5. Gleitelement nach einem der Ansprüche 1 bis 4, wobei die Lagerlegierungsschicht (11) 8,0 bis 14,0 Masse-% Sb, 1,0 bis 10,0 Masse-% Ag und im Übrigen Sn aufweist und wobei ein Flächenanteil, der von der anormal geformten intermetallischen Verbindungsphase (22) innerhalb des Querschnitts der Lagerlegierungsschicht belegt ist, im Bereich von 5 bis 20 % liegt.

6. Gleitelement nach einem der Ansprüche 1 bis 5, wobei die anormal geformte intermetallische Verbindungsphase (22) eine Sn-Sb-Phase als erste intermetallische Verbindungsphase und eine Sn-Ag-Phase als zweite intermetallische Verbindungsphase aufweist.

7. Gleitelement nach einem der Ansprüche 1 bis 6, ferner umfassend eine Deckschicht, welche eine erste Oberfläche der Lagerlegierungsschicht (11) gegenüber einer zweiten Oberfläche der Lagerlegierungsschicht (13), welche den Metallrücken (12) überlagert, abdeckt.

8. Lagervorrichtung, die mit dem Gleitelement (10) nach einem der Ansprüche 1 bis 7 versehen ist.

## Revendications

1. Élément de glissière (10) comprenant :
un support métallique (12) ;et
une couche d'alliage pour coussinet (11) disposée sur le support métallique et comprenant un alliage à base de Sn ;
dans lequel la couche d'alliage pour coussinet comprend :
une matrice de Sn (21), et
une phase de composé intermétallique anormalement formée (22) dispersée dans la matrice de Sn dans laquelle D ≧ 80 µm et Lc/D ≧ 350 % lorsque Lc représente un périmètre de la phase de composé intermétallique anormalement formée dans une section transversale de la couche d'alliage pour coussinet et D représente un diamètre d'un cercle circonscrit de la phase de composé intermétallique anormalement formée dans la section transversale dans laquelle une partie de limite entre la phase de composé intermétallique anormalement formée et la matrice de Sn s'étend en une forme convexo-concave complexe.

2. Élément de glissière selon la revendication 1, dans lequel la moyenne du diamètre D du cercle circonscrit de la phase de composé intermétallique anormalement formée (22) est dans la plage de 100 µm à 300 µm.

3. Élément de glissière selon la revendication 1 ou 2, dans lequel 50 % ou plus d'un comptage total de la phase de composé intermétallique anormalement formée (22) comprend des agrégats de deux types ou plus de phases de composé intermétallique et
dans lequel, parmi les agrégats des deux types ou plus de phases de composé intermétallique qui configurent la phase de composé intermétallique anormalement formée, une kième phase de composé intermétallique (2 ≦ k ≦ n) est plus petite et plus dure qu'une k-1ième phase de composé intermétallique, et une deuxième phase de composé intermétallique vient en contact avec une première phase de composé intermétallique, lorsque n (n ≧ 2) étant le nombre de phases de composé intermétallique configurant la phase de composé intermétallique anormalement formée et sont définis comme étant la première phase de composé intermétallique, ..., nièmephase de composé intermétallique.

4. Élément de glissière selon l'une quelconque des revendications 1 à 3, dans lequel la phase de composé intermétallique anormalement formée (22) comprend des agrégats de deux types ou plus de phases de composé intermétallique et
dans lequel, parmi les agrégats des deux types ou plus de phases de composé intermétallique qui configurent la phase de composé intermétallique anormalement formée, une kièmephase de composé intermétallique (2 ≦ k ≦ n) est plus petite et plus dure qu'une k-1ième phase de composé intermétallique, et
de manière 75 % ou plus du comptage total des agrégats de deux types ou plus de phases de composé intermétallique comprend une deuxième phase de composé intermétallique dans laquelle 50 % ou plus de la longueur totale d'un périmètre de celle-ci sert de limite avec
la matrice de Sn, lorsque n (n ≧ 2) étant le nombre de types des phases de composé intermétallique configurant la phase de composé intermétallique anormalement formée et sont définis en tant que première phase de composé intermétallique, ..., nièmephase de composé intermétallique.

5. Élément de glissière selon l'une quelconque des revendications 1 à 4, dans lequel la couche d'alliage pour coussinet (11) comprend 8,0 à 14,0 % en masse de Sb, 1,0 à 10,0 % en masse de Ag, et un complément de Sn, et dans lequel un pourcentage d'aire que la phase de composé intermétallique anormalement formée (22) occupe dans la section transversale de la couche d'alliage pour coussinet est dans la plage de 5 à 20 %.

6. Élément de glissière selon l'une quelconque des revendications 1 à 5, dans lequel la phase de composé intermétallique anormalement formée (22) comprend une phase de Sn-Sb en tant que première phase de composé intermétallique, et une phase de Sn-Ag en tant que deuxième phase de composé intermétallique.

7. Élément de glissière selon l'une quelconque des revendications 1 à 6, comprenant en outre une couche de couverture recouvrant une première surface de la couche d'alliage pour coussinet (11) face à une deuxième surface de la couche d'alliage pour coussinet (13) qui recouvre le support métallique (12).

8. Dispositif de palier pourvu de l'élément de glissière (10) selon l'une quelconque des revendications 1 à 7.
